# EUROPEAN PATENT SPECIFICATION

(11) **EP 0 174 027 B1**
(45) Date of publication and mention of the grant of the patent: **21.04.1993**
(21) Application number: 85111242.5
(22) Date of filing: 05.09.1985
(51) Int. Cl.: F25B 13/00, F25B 9/00, C09K 5/04

(54) **Heat pump apparatus**
Wärmepumpengerät
Appareil de pompe à chaleur

(30) Priority: 06.09.1984 JP 186707/84; 14.05.1985 JP 103472/84
(43) Date of publication of application: 12.03.1986
(73) Proprietor: MATSUSHITA ELECTRIC INDUSTRIAL CO., LTD., Kadoma-shi, Osaka-fu, 571 (JP)
(72) Inventor: Yoshida, Yuji, Itami City, 664 (JP); Suzuki, Shigeo, Hirakata City, 573 (JP); Nakatani, Kazuo, Moriguchi City, 570 (JP); Mukai, Yuji, Kadoma City, 571 (JP); Nakazawa, Akira, Kusatsu City, 525 (JP); Imoto, Takumi, Kusatsu City, 525 (JP)
(74) Representative: Dr. Elisabeth Jung Dr. Jürgen Schirdewahn Dipl.-Ing. Claus Gernhardt

(56) References cited:
- EP-A- 0 057 120
- EP-A- 0 059 322
- EP-A- 0 081 395
- EP-A- 0 105 831
- FR-A- 1 452 267
- FR-A- 2 130 556
- FR-A- 2 177 785
- GB-A- 2 059 109
- GB-A- 2 059 646
- GB-A- 2 068 996
- US-A- 2 492 725
- US-A- 3 642 639
- US-A- 4 006 603
- US-A- 4 303 536

## Description

### FIELD OF THE INVENTION AND RELATED ART STATEMENT

### 1. Field of the INVENTION

The present invention relates to operating a heat pump apparatus provided with a compressor which can control its refrigerating capacity by control of compressor speed via a frequency inverter.

### 2. DESCRIPTION OF THE RELATED PRIOR ART

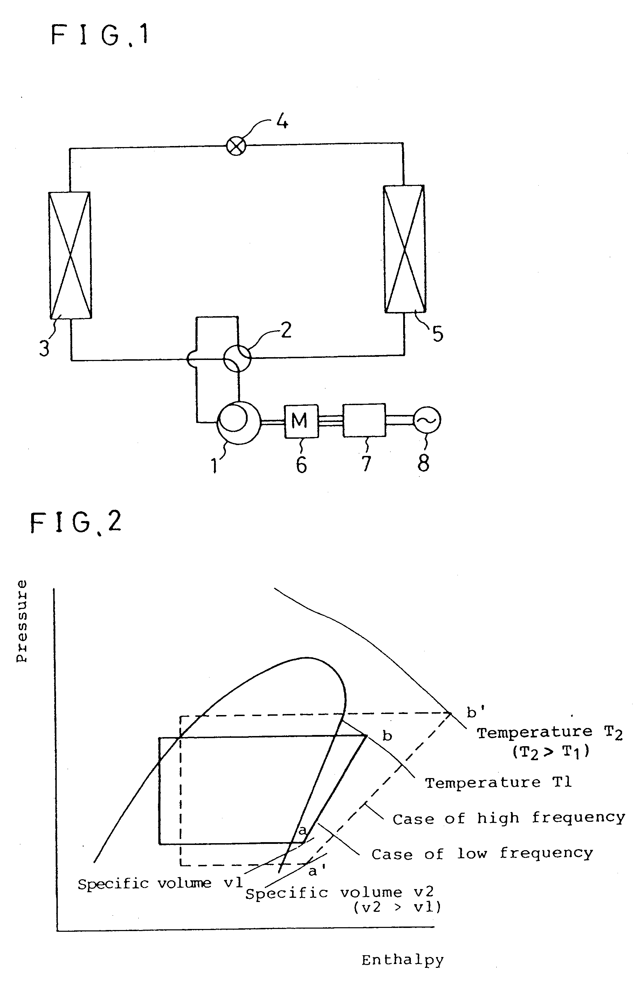

Recently, in case that a heat pump apparatus is used in middle range temperatures, in the heat pump with an inverter system, the flow rate of the refrigerant is controlled by controlling the frequency of the motor which drives the compressor, and thereby the refrigerating capacity of an air-cooling or air-heating apparatus is controlled. In this system, as shown FIG. 1, the refrigeration circuit is constructed by operatively connecting compressor 1, four way valve 2, primary heat exchanger for a heat sink 3, capillary tube or expansion valve 4, secondary heat exchanger fora heat source 5 and the like, and further an electric motor 6 for driving compressor 1 is connected to the commercial power source 8 through a frequency inverter 7. In this apparatus, the frequency of the electric motor 6 is controlled in response to the required refrigeration capacity. Such a conventional system, i.e. as shown in GB-A-2059646 however, has such defects as follows.

In such a conventional apparatus which uses a refrigerant comprising a single component for instance, R 22 or the like, even though the frequency of the motor driving current is increased to increase the flow rate of the refrigerant when a larger refrigeration capacity is required, the condensation temperature rises and the evaporation temperature falls due to the constantness of the heat exchanger areas of the primary heat exchanger for a heat sink and of the secondary heat exchanger for a heat source.These characteristics are - explained with reference to FIG. 2, wherein curves show the relations between the refrigerant pressure and enthalpy. When the frequency of the motor and therefore the compressor speed is small, the characteristics of the cycle is such as shown by a solid curve. When the frequency of the motor and therefore the compressor speed is large the high pressure (at the condensation temperature) rises and the low pressure (at the evaporation temperature) falls, and consequently, the characteristics of the cycle are such as shown by a dotted curve. In this case there exists the grave problem that the compression process shown by the curve a-b changed to the cycle shown by a curve a'-b' thereby decreasing its gradient as well as the condensation temperature rises. As a result of both of these facts, the temperature of the outlet port of the compressor 1 largely rises, thereby producing a considerable liability inducing deterioration and decomposition of the refrigerant. There is another problem in that not only an undesirable increase of the compression work load due to the increase of the compression ratio and a lowering of adiabatical efficiency occurs but that by the rise of the outlet port temperature, the frequency inverter 7 receives a great stress. Still another problem is that, since the lower pressure decreases in spite of the increase of the compressor speed, the specific volume of the refrigerant at the compressor inlet shown at the points a and a' increases, hence cannot increase the refrigeration capacity proportionally in spite of the increasing of speed.

Therefore in the conventional heat pump apparatus, in view of the requested reliability of the device, as a matter of fact an upper limit of changing the motor frequency and therefore the compressor speed exists and condition to use the maximum frequency is limited only at starting of operation of the apparatus. In consequence the variable range of refrigerating capacity has been much smaller in comparison with the variable range of motor frequency.

In case that a heat pump provided with a compressor controlled via a frequency inverter is used for heating at high temperatures, for instance for supplying hot water or radiant heat, if a single refrigerant called R 12 is used, since its vapor pressure is lower than R 22, it is possible to raise the condensation pressure and to utilize the heat of about 70°C.

On the contrary because the specific volume of gas of R 12 is larger than that of R 22, if the compressor having the same volume is used with the former, the heating capacity drops more than for R 22 by 30 to 40 %. To make up for those drawbacks of heating capacity there is a way of increasing the flow rate of the refrigerant by raising the revolution number and thereby the speed of the compressor, in this manner enabling one to make up the drawback of the heating capacity whithout using an undue large apparatus. However, the discharge temperature of the compressor rises rapidly due to the nature of the refrigerant, and there is the problem of inducing bad effects on the construction materials and the reliability of the compressor.

### OBJECT AND SUMMARY OF THE INVENTION

The object of the present invention is to provide a better mode of operation of a heat pump apparatus provided with a compressor lowering its discharge temperature when it is operated at an increased speed and having an extended variable range of refrigerating capacity thereby extending the application range of this apparatus. The use of multiple constituent refrigerants in heat pumps to improve the coefficient of performance (COP) is known for example from GB-A-2018221. In accordance with the present invention which is indicated in the single claim there is used a multiple-constituent refrigerant comprising some minor constituent refrigerant which has a lower critical pressure than a major constituent refrigerant, said refrigerant being enclosed in the refrigeration circuit as working fluid in a refrigrating system comprising a speed variable compressor. Particularly for use at a middle temperature, for instance air-cooling or heating, etc., it is possible to use such a heat pump apparatus effectively by selection of a refrigerant having a lower critical temperature than that of the major constituent refrigerant as the minor constituent refrigerant; and for use at high temperatures for instance for boiling of water, radiation of heat, etc., it is possible to utilize a refrigerant of higher critical temperature than that of the major constituent refrigerant as the minor constituent refrigerant.

### BRIEF DESCRIPTION OF THE DRAWINGS

FIG. 1 is a diagrammatic illustration of a heat pump apparatus with a speed variable compressor controlled via a frequency inverter for the driving motor as its essential part.

FIG. 2 is a graph showing the cycle characteristics of an embodiment, wherein a single refrigerant is used in a heat pump apparatus in FIG. 1.

FIG. 3 and 4 are graphs schematically showing characteristics of the refrigerant used in the heat pump apparatus in the present invention.

### DISCRIPTION OF THE PREFERRED EMBODIMENTS.

Concerning the heat pump apparatus used in the present invention, operation and constitution of the refrigerant is explained, referring to the embodiment heat pump apparatus shown in FIG. 1.

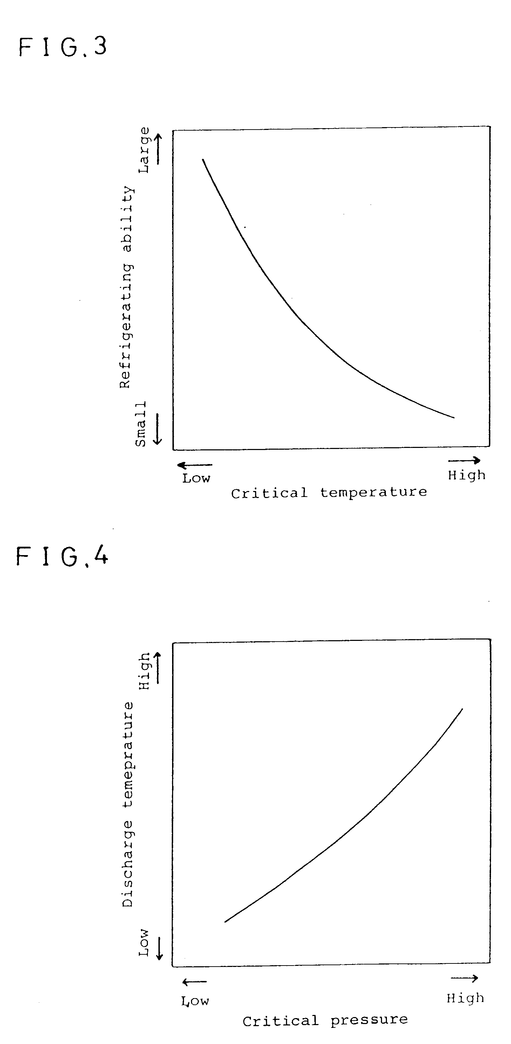

Firstly when a comparison is made under the condition of the same condensation temperature, the same evaporation temperature, and the compressor speed being identical, then as the critical temperature of a refrigerant is lower, the refrigerating capacity thereof is higher and as the critical temperature of a refrigerant is higher, the refrigerating capacity is lower. This relation is well known, for instance, as disclosed in FIG. 2.21 of a book "Reito-Kucho-Binran, Kisohen" (translation of the title of the book: Refrigeration and Airconditioning Handbook, volume of basic technology), published in 1972, by the Japanese Association of Refrigerating. In FIG. 2.21, the above mentioned relationship is explained as regards the normal boiling point, but furthermore there is a disclosure in this literature that there is a proportional relation also between the critical temperature and the normal boiling point. Therefore, in an inverter system, if the increasing rate of compressor speed, the condensation temperature, and the evaporation temperature are respectively the same, this relation is maintained and the trend is such as shown FIG. 3. On the contrary in the inverter system, the lower there is the critical temperature, the lower is the necessary compressor speed to maintain the required refrigerating capacity and this time the condensation temperature is lower and the evaporation temperature is higher in comparison with a refrigerant having a high critical temperature.

Next, it should be noted that concerning the characteristics of the refrigerant discharge temperature of compressor 1 there exists a close relation between the critical pressure and the molecular weight of each refrigerant as we have described in the Japanese Unexamined Patent Application Sho 59-157446(i.e. Japanese Patent Application Sho 58-27962) published on September 6, 1984.

That is to say when comparing the characteristics of the refrigerants under the condition of the same condensation temperature, the same evaporation temperature, and the same speed of the compressor, the lower critical pressure refrigerant (large molecular weight refrigerant) has a lower discharge temperature and on the contrary the higher critical pressure refrigerant (small moleculer weight refrigerant) has a higher discharge temperature. This trend is shown in FIG. 4.

Next, a first embodiment in accordance with the present invention which utilizes the operation in the middle temperature range of about 50°C is explained.

In the heat pump system based on the inverter system, constructed as shown in FIG. 1, when the refrigerant having a lower critical pressure and lower critical temperature than a standard refrigerant is used, in order to obtain the same refrigerating capacity as above-mentioned, then the compressor speed required becomes properly small. And as a further result, the drop of the discharge temperature becomes prominent because of the synergistic effect based on the effects of condensation temperature drop and discharge temperature drop when using the low critical pressure refrigerant.

Further it could be considered simply to replace a standard refrigerant with a refrigerant having a low critical pressure and a low critical temperature, but the critical pressure and the critical temperature of each refrigerant are its own characteristic values. Therefore, an arbitrary adjustment of the discharge temperature is not only impossible but it also has the defect that the low critical temperature refrigerant has a high vapor pressure and therefore when constructing the refrigerating system, its high pressure in the cycle rises greatly. Therefore it has been found suitable and practical that the standard refrigerant is selected corresponding to the objects of the heat pump apparatus, that should be adopted as a major constituents refrigerant, and/an appropriate amount of the minor constituent refrigerant having a lower critical pressure and lower critical temperature than those of the major constituent refrigerant is added.

That is to say, by means of adoption of the above-mentioned principle in comparison with the heat pump apparatus employing only one conventional standard refrigerant, the required compressor speed to obtain the same refrigerating capacity becomes sufficiently small, and therefore, not only the discharge temperature drops but also the excessive rising of the high pressure in the cycle can be suppressed. On the contrary,when increasing the frequency of the current of the motor 8 by the frequency inverter 7 to the extent of the prior art apparatus, it is possible to improve the refrigerating capacity more than the conventional capacity and further to extend the application range of the heat pump apparatus as such.

Examples for selections of these refrigerants are shown in the following. For the heat pump apparatus for air-cooling or air-heating, wherein hitherto R 22 has been solely used, it is preferable to add refrigerants shown in Table 1 as the minor constituent refrigerant. The critical pressure and critical temperature of them are shown in Table 1. Also in the heat pump apparatus for refrigerating, and for supplying-hot-water wherein hitherto R 12 has been used, it is preferable to add refrigerants shown in the Table 2 as the minor constituent refrigerant. The critical pressure and critical temperature of them are shown in Table 2.

**Table 1**

| refrigerant | R22 | R23 | R13 | R116 | SF6 | R13 B1 | R125 |
|---|---|---|---|---|---|---|---|
| critical pressure (atm) | 49.1 | 47.8 | 38.7 | 29.4 | 37.2 | 39.2 | 36.3 |
| critical temperature (°C) | 96.2 | 25.7 | 28.8 | 19.7 | 45.6 | 67.1 | 68.1 |

**Table 2**

| refrigerant | R12 | R13 | R116 | SF6 | R13 B1 | R125 | R115 | R218 |
|---|---|---|---|---|---|---|---|---|
| critical pressure (atm) | 40.7 | 38.7 | 29.4 | 37.2 | 39.2 | 36.3 | 31.6 | 26.4 |
| critical temperature (°C) | 111.8 | 28.8 | 19.7 | 45.6 | 67.1 | 68.1 | 80.0 | 71.9 |

The single refrigerant usually called by refrigerant number, R 22, R116, R 12 etc. is a substance mainly belonging to halogen hydrocarbons. And the substance is named in the following way.
The figure most to the left in the three digit figure shows the carbon number minus 1 (-1); the middle figure shows the number of hydrogen atoms plus 1 (+1), and 3 figure most to the right shows the fluorine number.

The method to give the refrigerant number is the same method as defined by ASHRAE standard (The American Society of Heating, Refrigerating and Air Conditioning Engineers). For instance, R 22, R 12, R 116, R 13 B 1 and R 218 designate CHCl F2, CCl₂F₂, C₂F₆, CF₃Br and C₃ F₈, respectively.

The critical pressure and the critical temperature are characteristic values of these substances, and these values shown in the Tables 1 and 2 have been given and recommended by researchers in the past. Further, as above mentioned, the critical pressure particularly has a close relation with its molecular weight. In general, in halogenated hydrocarbons, the larger a molecular weight the refrigerant has, the lower is the critical pressure, and the smaller a molecular weight the refrigerant has, the higher is the critical pressure. Therefore for minor constituent refrigerants of low critical pressure, a selection for a substance which includes larger molecular weight halogen atoms in such an order of atomic weight as fluorine, chlorine and bromine, may be made; but preferably the selection should be made on the basis of the measured value or recommended value of the critical pressure.

In case of the operation in the middle temperature of about 50°C it is desirable that the minor constituent refrigerant has a critical temperature above 50°C.

Furthermore, as described in the embodiment, because the critical pressure is closely concerned with the molecular weight and that the critical temperature is closely related to the normal boiling point, the standard of selection for a minor constituent refrigerant may be represented by any of the following wordings to imply the same meaning :
a) A refrigerant having a low critical pressure and a low critical temperature.
b) A refrigerant having a low critical pressure and a low normal boiling point.
c) A refrigerant having a large molecular weight and a low critical temperature.
d) A refrigerant having a large molecular weight and a low normal boiling point.

The present invention may be modified in the following manner. Besides those minor constituent refrigerants, a third ingredient may be included to improve the efficiency.

In the heat pump apparatus as shown FIG. 1, elucidation is made in respect of an embodiment wherein a primary heat exchanger for a heat sink 3 operates as a condenser and secondary heat exchanger for a heat source 5 operates as an evaporator, so that this heat pump is used for heating at high temperature by giving heat to the water and air in the condenser 3.

In a next embodiment, because almost all representatives of the high critical temperature refrigerants indicated a low vapor pressure, it is possible to lower the condensation pressure of the major constituent refrigerant by adding a suitable amount of a high critical temperature third constituent refrigerant. Also, it is possible to raise the condensation temperature, while maintaining an appropriate condensation pressure. However, the high critical temperature refrigerant generally has a large specific volume of gas. Therefore, if a compressor of the same cylinder volume as the conventional compressor would be used, the flow rate of the refrigerant would decrease, and hence the heating capacity decreases.

Therefore, in order to dissolve this problem, a variable frequency compressor is employed, thereby to operate the compressor via an electric motor connected to a frequency converter at a higher frequency than the frequency of a commercial power source, and to maintain by the increased compressor speed the necessary rate of circulation of the refrigerant without introduction of another or larger equipment. Further, since the added high critical temperature third constituent refrigerant combines with low critical pressure refrigerant, it is possible to utilize the high temperature heat without undesirable rising of the discharge temperature.

Also when the above mentioned major ingredient refrigerant is R 22 or R 12, and the third constituent refrigerant having a high critical temperature and a low critical pressure such as shown in Table 3 or 4 is added, it is possible to utilize a heat at higher temperature than hitherto realized with the single component refrigerant.

**Table 3**

| refrigerant | R22 | R12 | R152a | R124 | R142b | RC318 | R12B1 | R114 | R133a | R11 |
|---|---|---|---|---|---|---|---|---|---|---|
| critical pressure (atm) | 49.1 | 40.7 | 44.4 | 36.3 | 40.7 | 27.4 | 40.7 | 32.2 | 40.1 | 43.5 |
| critical temperature (°C) | 96.0 | 111.8 | 113.4 | 122.2 | 137.0 | 115.2 | 154.6 | 145.7 | 155.0 | 198.0 |

**Table 4**

| refrigerant | R12 | R124 | R142b | RC318 | R114 | R133a |
|---|---|---|---|---|---|---|
| critical pressure (atm) | 40.7 | 36.3 | 40.7 | 27.4 | 32.2 | 40.1 |
| critical temperature (°C) | 111.8 | 122.2 | 137.0 | 115.2 | 145.7 | 155.0 |

Also in this embodiment even if the words "high critical temperature refrigerant" are replaced by, "high normal boiling point refrigerant," the above relation is maintained; and also, even if the wording "low critical pressure refrigerant" is replaced by the words, "large molecular weight refrigerant," almost the same relation is maintained.

The reason why the major constituent refrigerant is to be present in an amount above 50 wt% is that if the above-mentioned substance of the third constituent refrigerant is added too much, the heating capacity drops excessively and the revolution number of the compressor and thereby its speed must be made excessively large, to avoid a decline of efficiency of the compressor as such. Therefore it is desirable that more than half of total refrigerant is the major constituent refrigerant. Further it is admissible to add at least one other ingredient within the range of the present invention.

The effect of the present embodiment is described as follows by taking an example realized for utilization in heating at high temperature in an apparatus for supplying hot water.

### EXAMPLE 1

In the heat pump system as shown in FIG. 1 the output power of the compressor is substantially one horse power, heat exchangers between water and the refrigerant are used as the condenser and the evaporator, through which water flows at the rate of 2.5 ℓ/min. R 22 and R 22/R 152 a (weight ratio 80/20) are used as refrigerants and the peaks of their coefficient of performance are compared under such conditions that the filled-in refrigerant amount and the opening degree of the capillary tube or expansion valve is modulated to keep the same condensation temperature identical.

The result of this embodiment is shown in Table 5.

**Table 5**

| refrigerant | condensation temperature | condensation pressure | exhaust temperature |
|---|---|---|---|
| R 22 | 43°C | 15.9 kg/cm²G | 92°C |
| R 22/R 152a (80/20) | 43°C | 13.5 kg/cm²G | 81°C |

In the case where R 22/R 152a (80/20) is used, the heating capacity decreases by 7 % in comparison with the case of R 22 alone, the coefficient of performance increases by 5 % in comparison of R 22 alone.

Next, in this embodiment, when a frequency inverter is connected to the compressor from outside and the frequency of a commercial power source with 60Hz is raised thereby to 70 Hz, the heating capacity increases by 3 % in comparison with the case of R 22 alone, the condensation temperature, the condensation pressure and the discharge temperature became 45°C, 14.2 kg/cm²G and 88°C, respectively.

That is to say, as the result of using the above-mentioned mixed refrigerant and frequency variable type compressor, it became possible to lower the condensation pressure and the discharge temperature, while maintaining the heating capacity.

Further when the frequency and thereby the speed of the compressor increases up to a condensation temperature equal to that of R 22, it is possible to improve the heating capacity and the condensation temperature more than in the case of R 22 alone and to hold the discharge temperature substantially equal to that of the case of R 22.

### EXAMPLE 2

The same experimental apparatus as that of the EXAMPLE 1, and R 12 and R 12/R 114 (weight ratio 70/30) are used as a mixture refrigerant. And in the same operation as that of EXAMPLE 1, comparison of refrigerants between R 12 and R 12/R 114 are made under such controls that the condensation temperatures of the two refrigerants are maintained at 70°C. Then compared to operation at 60 Hz of R 12 alone the heating capacity of R 12/R 114 was almost equal at the higher speed of 70 Hz, and the latter's condensation pressure dropped by 5 kg/cm² and the discharge temperature was only 77°C, which was lower by about 7°C compared to the case of R 12 alone at 60 Hz. This discharge temperature is not so high as to badly effect the life and reliance of the apparatus.

Therefore, it is further possible to increase the condensation pressure up to about that of R 12, by increasing the revolution number of the compressor, thereby further improving the condensation temperature, so that the heating capacity is higher than in the case of R 12.

## Claims

1. Use of a multiple-constituent refrigerant selected from the group consisting of:
(i) above 50 percent by weight of R22 and at least one minor constituent refrigerant having a lower critical pressure than R22 and being selected from the group consisting of R23,R13,R116,SF6,R13B1, R125,R12,R152a,R124,R142b,RC318,R12B1,R114,R133a,and R11; or
(ii) above 50 percent by weight of R12,and at least one minor constituent refrigerant having a lower critical pressure than R12 and being selected from the group consisting of R13,R116,SF6,R13B1,R125, R115,R218,R124,R142b,RC318,R114 and R133a,
as the working fluid in a heat pump refrigeration circuit comprising and operatively connecting:
(a) a variable-r.p.m. compressor driven by an electric motor connected to a frequency inverter;
(b) a primary heat exchanger for a heat sink;
(c) a capillary tube or expansion valve; and
(d) a secondary heat exchanger for a heat source,
to lower the discharge temperature of the compressor at times when the compressor is being operated at an increased speed in response to the required refrigeration capacity at which said compressor would be operated.

## Patentansprüche

1. Verwendung eines aus mehreren Bestandteilen bestehenden Kühlmittels, welche ausgewählt sind aus der Gruppe, bestehend aus
( i) mehr als 50 Gew% an R22 und mindestens einem kleineren Kühlmittelbestandteil mit einem niedrigeren kritischen Druck als R22, ausgewählt aus der Gruppe, bestehend aus R23, R13, R116, SF6, R13B1, R125, R12, R152a, R124, R 142b, RC318, R12B1, R114, R133a und R 11; oder
(ii) mehr als 50 Gew% an R12 und mindestens einem kleineren Kühlmittelbestandteil mit einem niedrigeren kritischen Druck als R12, ausgewählt aus der Gruppe, bestehend aus R13, R116, SF6, R13B1, R125, R115, R218, R124, R142b, RC318, R114 und R 133a
als Arbeitsflüssigkeit in einem Wärmepumpen-Kühlkreislauf, der die nachstehenden Elemente in betriebsfähigem Verbund umfaßt:
(a) einen mit variabler Umdrehungszahl pro Minute betriebenen und von einem Elektromotor angetriebenen Kompressor, der mit einem Frequenzumwandler verbunden ist,
(b) einem primären Wärmeaustauscher, der als Wärmesenke dient;
(c) ein Kapillarrohr oder ein Expansionsventil; und
(d) einen Sekundär-Wärmeaustauscher, der als Wärmequelle dient, zwecks Absenken der Auslaßtemperatur des Kompressors zu solchen Zeiten, wo der Kompressor mit erhöhter Geschwindigkeit betrieben wird, und zwar als Reaktion auf die geforderte Kühlkapazität, bei welcher der besagte Kompressor betrieben werden sollte.

## Revendications

1. Utilisation d'un réfrigérant à multiple constituant sélectionné dans le groupe qui est constitué de :
(i) au-dessus de 50 pourcent en poids de R22 et au moins un réfrigérant constituant mineur ayant une pression critique inférieure à celle de R22 et étant sélectionné dans le groupe qui est constitué de R23, R13, R116, SF6, R13B1, R125, R12, R152a, R124, R142b, RC318, R12B1, R114, R133a et R11 ; ou
(ii) au-dessus de 50 pourcent en poids de R12 et au moins un réfrigérant constituant mineur ayant une pression critique inférieure à celle de R12 et étant sélectionné dans le groupe qui est constitué de R13, R116, SF6, R13B1, R125, R115, R218, R124, R142b, RC318, R114 et R133a,
en tant que fluide de travail dans un circuit de réfrigération de pompe à chaleur comprenant et connectant de manière fonctionnelle :
(a) un compresseur à t.p.m. variable entraîné par un moteur électrique connecté à un convertisseur de fréquence ;
(b) un échangeur de chaleur primaire pour un radiateur thermique ;
(c) un tube capillaire ou soupape de détente, et
(d) un échangeur de chaleur secondaire pour une source de chaleur,
afin d'abaisser la température de refoulement du compresseur au moment où le compresseur est mis en oeuvre à une vitesse accrue en réponse à la capacité de réfrigération requise à laquelle le compresseur devra répondre.
